# EUROPÄISCHE PATENTSCHRIFT

(11) **EP 1 085 194 B1**
(45) Veröffentlichungstag und Bekanntmachung des Hinweises auf die Patenterteilung: **31.03.2004**
(21) Anmeldenummer: 00117267.5
(22) Anmeldetag: 16.08.2000
(51) Int. Cl.: F02D 41/40, F01L 1/02

(54) **Verfahren zur Überwachung des Verschleisses eines mit einem Zahnriemen ausgestatteten Nockenwellenantriebes**
Method for monitoring the wear of a toothed belt equipping a camshaft drive
Méthode pour surveiller l'usure d'une courroie dentée équipant un arbre à cames de conduite

(30) Priorität: 14.09.1999 DE 19943917
(43) Veröffentlichungstag der Anmeldung: 21.03.2001
(73) Patentinhaber: Volkswagen Aktiengesellschaft, 38436 Wolfsburg (DE)
(72) Erfinder: Kracke, Andreas, Dipl.-Ing., 38518 Gifhorn (DE)

(56) Entgegenhaltungen:
- EP-A- 0 715 059
- EP-A- 0 836 036
- DE-A- 4 041 538
- DE-C- 19 503 457
- US-A- 6 047 593

## Beschreibung

Die Erfindung betrifft ein Verfahren zur Überwachung des Verschleißes eines Endlostriebes, insbesondere eines mit einem Zahnriemen ausgestatteten Nockenwellenantriebes einer Brennkraftmaschine.

Es ist ein Verfahren zur Überwachung des Verschleißes einer Motorsteuerkette bekannt, DE 195 03 457 C 1, bei dem im Motorbetrieb die relative Phasenlage der Winkelstellungen zweier-Kettenräder des Steuerkettenantriebes dazu genutzt wird, eine unzulässige Längung der Steuerkette zu berechnen, wobei mindestens diese Kettenräder mit zusätzlichen Sensoren versehen werden müssen, was einen zusätzlichen Bauaufwand erfordert und entsprechend kostenintensiv ist.

Bei Nockenwellenantrieben über Zahnriemen ist eine solche Überwachung nicht bekannt, wäre jedoch ebenfalls vorteilhaft, da die hoch beanspruchten Zahnriemen in der Regel nur bei den festgelegten Wartungsterminen durch manuelle und optische Prüfung überwacht werden, was sehr arbeits- und kostenintensiv ist, da sie oft voll gekapselt laufen und zur Kontrolle erst aufwendig freigelegt werden müssen. Bereits eine geringe Zahnriemenlängung kann jedoch schon zum Überspringen eines Zahnes einer Riemenscheibe führen, was, wie bei einem vollständigen Riß eines Zahnriemens, in der Regel zu einem Motortotalschaden führt, da dann die Kolben mit den Ventilen kollidieren und den Ventiltrieb zerstören. Eine zusätzliche Sensorik, wie etwa Wegsensoren für Zahnriemenspanner oder Zahnriemenzustand sind derzeit weder entwickelt noch kostengünstig darstellbar.

Aufgabe der Erfindung ist es, ein Verfahren zur Überwachung des Verschleißes eines mit einem Endlostrieb, vorzugsweise einem Zahnriemen ausgestatteten Nockenwellenantriebes einer Brennkraftmaschine zur Verfügung zu stellen, welches möglichst kostenneutral, effektiv und zuverlässig arbeitet.

Die Lösung dieser Aufgabe wird erfindungsgemäß durch die mit den Merkmalen gemäß dem Hauptanspruch angegebene technische Lehre vermittelt.

Das erfinderische Verfahren zieht als Maß für den Verschleiß des Endlostriebes, insbesondere des Nockenwellenantriebes die Zahnriemenlängung heran, die aus einem Wert für eine Spätverstellung des Einspritzbeginns bei gedehntem Zahnriemen im Verhältnis zu einem Wert für den Einspritzbeginn bei intaktem Zahnriemen von der im Fahrzeug bereits vorhandenen elektronischen Motorsteuerung berechnet wird. Dabei kann dieses Verfahren an allen Motorentypen verwendet werden, bei denen der Einspritzbeginn vom Zahnriementrieb beeinflußt wird, was insbesondere bei vom Zahnriementrieb angetriebenen Einspritzpumpen der Fall ist.

Besonders vorteilhaft läßt sich hier die Überwachung eines Zahnriementriebes mittels bereits im Fahrzeug vorhandener elektronischer und mechanischer Bauteile ohne zusätzliche Herstellkosten über eine reine Softwarefunktion der elektronischen Motorsteuerung realisieren. Störungen im Nockenwellenantrieb treten dabei am häufigsten durch Zahnriemenlängung, durch ein Schieflaufen des Zahnriemens sowie ein Nachlassen der Spannerdämpfung auf. Ein Schieflaufen des Zahnriemens läßt sich mit dem erfinderischen Verfahren zwar nicht direkt detektieren, jedoch steigt bei einem Schieflauf mit abnehmender effektiver Zahnriemenbreite dessen spezifische Zugbelastung und wächst damit in Folge die Zahnriemenlängung, so daß letztlich auch ein Schieflaufen über die Zahnriementängung erkannt werden kann.

Voraussetzung für eine solche Diagnosefunktion ist eine korrekte Grundeinstellung von Zahnriemen, Steuerzeiten, Zahnriemenspanner und Einspritzpumpe. Diese Grundeinstellung muß in der Produktion oder im Kundendienst nach erfolgter Zahnriemenwartung der elektronischen Motorsteuerung z.B. durch Codierung mitgeteilt werden. Gleichzeitig wird der korrekte Einbau der Einspritzpumpe automatisch mit überwacht, so daß diesbezügliche Fehlmontagen erkannt und Schäden z.B. durch Sprtizbeginnfehler vermieden werden können.

Auch das Nachlassen der Spannerdämpfung hat zur Folge, daß sich der Wert für eine Spätverstellung des Einspritzbeginns im Gegensatz zu dem Wert des Einspritzbeginns bei intaktem Zahnriemen verändert. Der Einspritzbeginn wird in der Regel bei zunehmendem Zahnriemenverschleiß später, so daß auch ein defekter Zahnriemenspanner bzw. ein insgesamt fehlerhafter Nockenwellenantrieb erkannt werden kann.

Weiterhin ist von Vorteil, daß nicht nur kapitale Motorschäden durch frühzeitige Erkennung des Verschleißes des Nockenwellenantriebes vermieden werden können, sondern daß der Arbeitszeitbedarf bei Motorinspektionen erheblich verringert wird, da der oftmals voll gekapselte Zahnriemen zur Kontrolle nicht extra freigelegt werden muß. Weiterhin läßt sich diese Funktion der elektronischen Motorsteuerung bis auf die Entwicklung der notwendigen Software ohne zusätzliche Herstellkosten mit der im Fahrzeug vorhandenen Hardware realisieren.

Der Wert für den Spritzbeginn im geregelten-Motorbetrieb sowie bei der Grundeinstellung wird gegeneinander auf Plausibilität geprüft und bei entsprechend großer dauerhafter bzw. sich weiter vergrößernden Abweichung vom Soll-Wert und Überschreitung eines zulässigen Grenzwertes für die Zahnriemenlängung vorteilhafterweise als Warnhinweis für einen Fahrer angezeigt oder auch als Eintrag in einem Fehlerspeicher der elektronischen Motorsteuerung abgelegt, so daß dieser bei einer Inspektion aüsgelesen und der Fehler behoben werden kann.

Da ein neu eingebauter Zahnriemen zunächst eine unkritische Anfangslängung aufweist und sich anschließend über seine Lebensdauer nicht weiter dehnt, läßt sich diese Anfangslängung einem zulässigen Grenzwert für die Zahnriemenlängung zurechnen, so daß das Verfahren keine Fehlwarnungen des Fahrers erzeugt.

Eine andere vorteilhafte Lösung, die Anfangslängung eines neuen Zahnriemens zu kompensieren besteht darin, daß eine automatische Prüfung der Zahnriemenlänge erst nach einer vorwählbaren Betriebsdauer, die zwischen ein und fünf Stunden liegen kann, erfolgt und der gemessene Wert für den Einspritzbeginn als Soll- oder Ausgangswert für eine korrekte Zahnriemenlänge gesetzt wird.

Das erfinderische Verfahren erfolgt bevorzugterweise bei betriebswarmem Motor, wozu der Leerlaufanteil im Fahrbetrieb ausreichend ist. Weiterhin reicht es aus, wenn das Verfahren einmal am Tag bzw. bei jedem Betriebsvorgang einmal aktiviert wird.

Von besonderer Bedeutung für das Meßergebnis ist die Kraftstofftemperatur, die es erfordert, daß das Verfahren nur in einem definierten Kraftstofftemperaturbereich durchgeführt wird, wobei die ermittelten Soll- und Ist-Werte für den Einspritzbeginn im Verhältnis zu festgelegten Kennlinien oder Kennfeldern über die Kraftstofftemperatur ausgewertet werden.

Dabei wird das erfindungsgemäße Verfahren bevorzugt an einem Zahnriementrieb erläutert, ist darüber hinaus jedoch auch an alternativen Endlostrieben, vorzugsweise von Brennkraftmaschinen, z.B. Steuerkettentrieben, anderen Riementrieben usw. vorteilhaft einsetzbar.

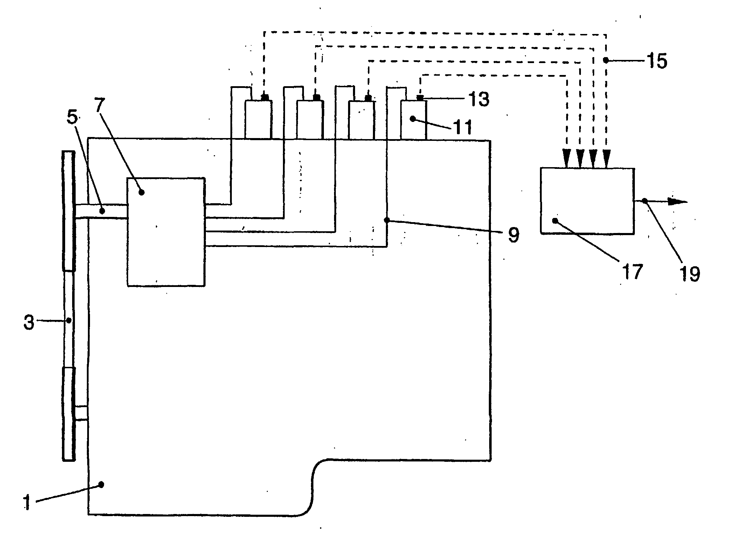

Ein Ausführungsbeispiel zur Durchführung des erfindungsgemäßen Verfahrens ist in der Figur 1 dargestellt und wird im Folgenden näher erläutert. Dabei zeigt die
- Figur 1:: eine stark vereinfachte Darstellung einer Brennkraftmaschine mit einem Zahnriementrieb.

Eine in der Figur 1 schematisch dargestellte Brennkraftmaschine 1 weist dabei einen von einem Zahnriemen 3 angetriebenen Nockenantrieb 5 auf, der in bekannter Weise in eine Kraftstoffeinspritzpumpe 7, vorzugsweise eine Verteilereinspritzpumpe ragt und dort in bekannter Weise Pumpenkolben zur Kraftstoffhochdruckerzeugung antreibt. Dieser aufgebaute Kraftstoffhochdruck gelangt über Einspritzleitungen 9 zu den einzelnen Einspritzventilen 11, wo er in den Brennraum der zu versorgenden Brennkraftmaschine eingespritzt wird. Der Einspritzzeitpunkt wird dabei über Sensoren 13, vorzugsweise Nadelbewegungsfühler erfaßt und über elektrische Steuerleitungen 15 an ein elektronisches Steuergerät 17 weitergeleitet. Innerhalb dieses Steuergerätes erfolgt der Sollwert-Istwertvergleich für den Einspritzbeginn, aus dessen Ergebnis sich in vorstehend beschriebener Weise ein Wert für die Zahnriemenlängung ableiten läßt, der entsprechend als Anzeige 19 ausgegeben wird.
Dabei ist es besonders vorteilhaft, die Kraftstoffeinspritzung mittels einer Verteilereinspritzpumpe vorzunehmen und den Einspritzbeginn mittels eines Nadelbewegungsfühlers einer in der elektronischen Motorsteuerung vorhandenen Spritzbeginnmessung zu detektiertieren, wobei eine solche Messung des Einspritzbeginns bevorzugt im Leerlauf einer Brennkraftmaschine mit aktiver Spritzbeginnregelung erfolgt und der ermittelte Wert für die Spritzverstelleransteuerung mit einem in der Motorsteuerung festgelegten Soll-Wert verglichen wird.

Das erfindungsgemäße Verfahren kann aber alternativ auch an anderen Einspritzsystemen (z.B. Pumpe-Düse, Reihen-oder Einzelpumpen) verwendet werden, bei denen der Einspritzbeginn detektiert wird und die Einspritzung über den Zahnriementrieb angetrieben oder gesteuert wird
Eine weitere Möglichkeit der Messung eines Einspritzbeginns kann dabei in einer Grundeinstellung des Spritzverstellers bei deaktivierter Spritzbeginnregelung und auf einen mechanischen Anschlag gefahrenen Spritzverstellerkolben durchgeführt werden, wobei der ermittelte Wert für den Einspritzbeginn ebenfalls mit einem über eine Kennlinie oder ein Kennfeld temperaturkorrigierten Sollwert der Motorsteuerung verglichen wird.

Das erfinderische Überwachungsverfahren kann ebenfalls vorteilhaft bei einer Kraftstoffeinspritzung verwandt werden, welche mit einem Magnetventil gesteuerten System arbeitet, wobei der von dem Soll-Wert abweichende Einspritzbeginn und die daraus ermittelte Zahnriemenlängung über eine Phasenverschiebung zwischen einem Nockenwellengeber und einem Kurbelwellengeber in Abhängigkeit von der Drehzahl und der Zeitdifferenz ermittelt werden kann. Ganz besonders vorteilhaft kann insbesondere bei einem Pumpe-Düse-Einspritzsystem das Ergebnis des Verfahrens dazu genutzt werden, um einen aufgrund der Zahnriemenlängung auftretenden Einspritzmengendrift durch die elektronische Motorsteuerung automatisch im Betrieb auszugleichen.

## Patentansprüche

1. Verfahren zur Überwachung des Verschleißes eines Endlostriebs, vorzugsweise eines mit einem Zahnriemen (3) ausgestatteten Nockenwellenantriebes (5) einer Brennkraftmaschine (1) mit elektronischer Motorsteuerung (17) und Kraftstoffeinspritzung mit Detektion des Einspritzbeginns, insbesondere für direkt einspritzende Brennkraftmaschinen, wobei der Endlostrieb den Einspritzbeginn für den Kraftstoff der Brennkraftmaschine beeinflußt, wobei als Maß des Verschleißes die Längung des Endlostriebmittels, vorzugsweise die Zahnriemenlängung, herangezogen wird und diese Längung aus einem Wert für eine Spätverstellung des Einspritzbeginns bei gedehntem Endlostriebmittel, vorzugsweise gedehntem Zahnriemen und einem Wert für den Einspritzbeginn bei intaktem Endlostrieb von der Motorsteuerung berechnet wird.

2. Verfahren nach Anspruch 1, **dadurch gekennzeichnet, daß** bei Überschreitung eines zulässigen Grenzwertes für die Endlostrieblängung, insbesondere eine Zahnriemenlängung ein Wamhinweis an einen Fahrer und/oder ein Eintrag in einen Fehlerspeicher der elektronischen Motorsteuerung erfolgt.

3. Verfahren nach Anspruch 1, **dadurch gekennzeichnet, daß** eine unkritische Anfangslängung einem zulässigen Grenzwert für die Zahnriemenlängung zugerechnet wird.

4. Verfahren nach Anspruch 1, **dadurch gekennzeichnet, daß** eine unkritische Anfangslängung über eine automatische Prüfung der Grundeinstellung der Brennkraftmaschine durch die Motorsteuerung nach einer vorwählbaren Betriebsdauer erfolgt und der gemessene Wert gespeichert und als Ausgangswert bzw. Soll-Wert für eine korrekte Zahnriemenlänge gesetzt wird.

5. Verfahren nach Anspruch 1, **dadurch gekennzeichnet, daß** das Verfahren bei betriebswarmem Motor durchgeführt wird.

6. Verfahren nach Anspruch 5, **dadurch gekennzeichnet, daß** das Verfahren im Leerlauf durchgeführt wird.

7. Verfahren nach Anspruch 5, **dadurch gekennzeichnet, daß** das Verfahren einmal am Tag oder einmal während des ununterbrochenen Betriebes einer Brennkraftmaschine erfolgt.

8. Verfahren nach Anspruch 1, **dadurch gekennzeichnet, daß** das Verfahren in einem definierten Kraftstofftemperaturbereich durchgeführt wird.

9. Verfahren nach Anspruch 8, **dadurch gekennzeichnet, daß** die bei unterschiedlichen Kraftstofftemperaturen ermittelten Soll- und Ist-Werte mittels Kennlinien oder Kennfeldern ausgewertet werden.

10. Verfahren nach Anspruch 1, **dadurch gekennzeichnet, daß** als Kraftstoffeinspritzung eine Verteilereinspritzpumpe (7) Verwendung findet und der Einspritzbeginn mittels eines Nadelbewegungsfühlers (13) einer in der elektronischen Motorsteuerung vorhandenen Spritzbeginnmessung detektiert wird.

11. Verfahren nach Anspruch 10, **dadurch gekennzeichnet daß** eine Messung des Einspritzbeginns im Leerlauf der Brennkraftmaschine mit aktivierter Spritzbeginnregelung durchgeführt und der ermittelte Wert mit einem Soll-Wert verglichen wird.

12. Verfahren nach Anspruch 10, **dadurch gekennzeichnet, daß** eine Messung des Einspritzbeginns in einer.Grundeinstellung des Spritzverstellers bei deaktivierter Spritzbeginnregelung und einem auf einen mechanischen Anschlag gefahrenen Spritzverstellerkolben durchgeführt und der ermittelte Wert für den Einspritzbeginn mit einem Soll-Wert verglichen wird.

13. Verfahren nach Anspruch 1, **dadurch gekennzeichnet, daß** als Kraftstoffeinspritzung ein magnetventilgesteuertes System Verwendung findet und von einem Soll-Wert abweichende Einspritzbeginn und damit die Zahnriemenlängung über eine Phasenverschiebung zwischen einem Nockenwellengeber und einem Kurbelwellengeber in Abhängigkeit von der Drehzahl und der Zeitdifferenz ermittelt wird.

14. Verfahren nach Anspruch 13, **dadurch gekennzeichnet, daß** bei einem Pumpe-Düse-Einspritzsystem das Ergebnis des Verfahrens genutzt wird, um einen aufgrund der Zahnriemenlängung auftretenden Einspritzmengendrift automatisch im Betrieb auszugleichen.

## Claims

1. Method for monitoring the wear of an endless drive, preferably of a camshaft drive (5), equipped with a toothed belt (3), of an internal combustion engine (1) with electronic engine control (17) and fuel injection with detection of the start of injection, in particular for a direct-injection internal combustion engine, the endless drive influencing the start of injection for the fuel of the internal combustion engine, the elongation of the endless drive means, preferably of the toothed-belt elongation, being used as a measure of the wear, this elongation being calculated by the engine control from a value for a retard of the start of injection, with the endless drive means stretched, preferably with the toothed belt stretched, and from a value for the start of injection in the case of an intact endless drive.

2. Method according to Claim 1, **characterized in that**, when a permissible limit value for the endless-drive elongation, in particular a toothed-belt elongation, is exceeded, a warning to a driver is given and/or an entry into a fault store of the electronic engine control is made.

3. Method according to Claim 1, **characterized in that** a non-critical initial elongation is assigned to a permissible limit value for the toothed-belt elongation.

4. Method according to Claim 1, **characterized in that** a non-critical initial elongation is obtained via an automatic check of the basic setting of the internal combustion engine by means of the engine control after a preselectable operating period, and the measured value is stored and is set as the initial value or the desired value for a correct toothed-belt length.

5. Method according to Claim 1, **characterized in that** the method is carried out when the engine is warm due to running.

6. Method according to Claim 5, **characterized in that** the method is carried out during idling.

7. Method according to Claim 5, **characterized in that** the method is carried once a day or once during the uninterrupted operation of an internal combustion engine.

8. Method according to Claim 1, **characterized in that** the method is carried out in a defined fuel temperature range.

9. Method according to Claim 8, **characterized in that** the desired and actual value is determined in the case of different fuel temperatures are evaluated by means of characteristic curves or characteristic diagrams.

10. Method according to Claim 1, **characterized in that** a distributor injection pump (7) is used as fuel injection and the start of injection is detected by means of a needle-movement sensor (13) of a start-of-injection measurement present in the electronic engine control.

11. Method according to Claim 10, **characterized in that** a measurement of the start of injection is carried out during the idling of the internal combustion engine, with activated start-of-injection regulation, and the value determined is compared with a desired value.

12. Method according to Claim 10, **characterized in that** a measurement of the start of injection is carried out in a basic setting of the injection adjuster, with the start-of-injection regulation deactivated and with an injection-adjuster piston moved onto a mechanical stop and the value determined for the start of injection is compared with a desired value.

13. Method according to Claim 1, **characterized in that** a system controlled by solenoid valves is used as fuel injection, and a start of injection deviating from a desired value and consequently the toothed-belt elongation are determined via phase displacement between a camshaft transmitter and a crankshaft transmitter as a function of the rotational speed and the time difference.

14. Method according to Claim 13, **characterized in that**, in the case of a pump/nozzle injection system, the result of the method is utilized in order to compensate automatically, during operation, an injection-quantity drift which occurs on account of the toothed-belt elongation.

## Revendications

1. Procédé pour surveiller l'usure d'un système d'entraînement sans fin, de préférence d'un système d'entraînement d'arbre à cames (5) équipé d'une courroie crantée (3) dans un moteur à combustion interne (1) avec commande du moteur électronique (17) et injection de carburant avec détection du début d'injection, notamment dans un moteur à combustion interne à injection directe, le système d'entraînement sans fin influant sur le début d'injection du carburant dans le moteur à combustion interne, l'usure étant déterminée en fonction de l'allongement du moyen d'entraînement sans fin, de préférence de l'allongement de la courroie crantée, cet allongement étant calculé par la commande du moteur à partir d'une valeur pour l'ajustage retardé du début d'injection lorsque le moyen d'entraînement sans fin, de préférence la courroie crantée, est allongé et d'une valeur pour le début d'injection lorsque le moyen d'entraînement sans fin est intact.

2. Procédé selon la revendication 1, **caractérisé en ce que**, lorsque l'allongement du système d'entraînement sans fin, notamment d'une courroie crantée, dépasse une valeur limite tolérée, cette information est communiquée au conducteur sous forme d'alerte et/ou entrée dans une mémoire d'erreurs de la commande du moteur électronique.

3. Procédé selon la revendication 1, **caractérisé en ce qu'**un allongement initial anodin est attribué à une valeur limite tolérée de l'allongement de la courroie crantée.

4. Procédé selon la revendication 1, **caractérisé en ce qu'**un allongement initial anodin est déterminé par une vérification automatique, effectuée par la commande du moteur après une durée de service que l'on peut choisir au préalable, du réglage de base du moteur à combustion interne et que la valeur mesurée est mise en mémoire et est prise comme valeur de consigne ou valeur de départ pour une longueur correcte de la courroie crantée.

5. Procédé selon la revendication 1, **caractérisé en ce que** le procédé est mis en oeuvre quand le moteur est chaud.

6. Procédé selon la revendication 5, **caractérisé en ce que** le procédé est mis en oeuvre au ralenti.

7. Procédé selon la revendication 5, **caractérisé en ce que** le procédé est mis en oeuvre une fois par jour ou une fois pendant le fonctionnement ininterrompu d'un moteur à combustion interne.

8. Procédé selon la revendication 1, **caractérisé en ce que** le procédé est mis en oeuvre dans une plage définie de température du carburant.

9. Procédé selon la revendication 8, **caractérisé en ce que** les valeurs de consigne et les valeurs réelles obtenues pour les différentes températures de carburant sont interprétées au moyen de courbes ou de diagrammes caractéristiques.

10. Procédé selon la revendication 1, **caractérisé en ce qu'**on utilise comme dispositif d'injection de carburant une pompe d'injection à distributeur (7) et qu'on détecte le début d'injection au moyen d'un capteur de déplacement d'aiguille (13) d'un organe de mesure du début d'injection prévu dans la commande du moteur électronique.

11. Procédé selon la revendication 10, **caractérisé en ce qu'**on mesure le début d'injection pendant le fonctionnement au ralenti du moteur à combustion interne avec régulateur de début d'injection activé et que la valeur obtenue est comparée à une valeur de consigne.

12. Procédé selon la revendication 10, **caractérisé en ce qu'**on mesure le début d'injection lorsque le variateur d'injection a été soumis à un réglage de base, que le régulateur de début d'injection est désactivé et que le piston du variateur d'injection est en appui contre une butée mécanique et **en ce que** la valeur du début d'injection obtenue est comparée à une valeur de consigne.

13. Procédé selon la revendication 1, **caractérisé en ce qu'**on utilise comme dispositif d'injection de carburant un système commandé par électrovannes et qu'un début d'injection, et par conséquent l'allongement de la courroie crantée, différent de la valeur de consigne, est déterminé par déphasage entre un capteur arbre à cames et un capteur vilebrequin en fonction du régime et du décalage dans le temps.

14. Procédé selon la revendication 13, **caractérisé en ce que**, dans le cas d'un système d'injection pompe-injecteur, le résultat du procédé est mis à profit pour compenser automatiquement lors du fonctionnement une dérive de la quantité de carburant injecté, due à l'allongement de la courroie crantée.
